# EUROPÄISCHE PATENTSCHRIFT

(11) **EP 0 885 599 B1**
(45) Veröffentlichungstag und Bekanntmachung des Hinweises auf die Patenterteilung: **11.05.2005**
(21) Anmeldenummer: 98107521.1
(22) Anmeldetag: 24.04.1998
(51) Int. Cl.: A61C 5/06

(54) **Betätigungseinrichtung**
Application device
Applicateur

(30) Priorität: 18.06.1997 DE 19725863
(43) Veröffentlichungstag der Anmeldung: 23.12.1998
(73) Patentinhaber: Ivoclar Vivadent AG, 9494 Schaan (LI)
(72) Erfinder: Winkler, Siegbert, 6800 Tisis (AT)
(74) Vertreter: Baronetzky, Klaus, Dipl.-Ing.

(56) Entgegenhaltungen:
- US-A- 4 295 828
- US-A- 4 993 948

## Beschreibung

Die Erfindung betrifft eine Betätigungsvorrichtung gemäß dem Oberbegriff von Anspruch 1.

Eine derartige Betätigungsvorrichtung ist aus der US-PS 44 72 141 bekannt. Diese Betätigungsvorrichtung weist einen Handgriff auf, der auf einen Stößel wirkt, über den eine pastöse Masse für Dentalzwecke aus einer Kapsel oder Patrone herausgedrückt werden soll. Hierzu sind gemäß der US-PS 44 72 141 eine schraubbare Verschlußkappe und eine Hinterschneidung in Form eines Gegenkragens aufweisende Kapsel oder Patrone vorgesehen, die im vorderen Ende der Betätigungseinrichtung anbringbar sind. Die über einen Handgriff auf den Stößel und damit auf die Kapsel oder Patrone aufzubringende Kraft beträgt regelmäßig ein Mehrfaches der Handkraft, wobei aufgrund der gewählten Hebelverhältnisse beispielsweise die fünffache Handkraft auf die pastöse Masse aufgebracht wird.

Nachdem der Abstand zwischen dem Druckbereich des Handgriffs und dessen Schwenkachse den Abstand zwischen der Schwenkachse und Mitnehmern des Stößels erheblich, beispielsweise um das Fünffache überschreitet, kann die demnach aufgebrachte Stößelkraft insofern durchaus im Bereich von einem kN oder sogar darüber liegen. Im Hinblick auf diese Kraft besteht die Gefahr, daß die Kapsel oder Patrone aus der vergleichsweise dünnen Schraubkappe herausbricht oder sich im Bereich des Gegenkragens derart verformt, daß eine sichere Abstützung nicht mehr möglich ist. Dies gilt insbesondere dann, wenn die Schraubkappe nicht fest aufgeschraubt ist, da dann nicht gewährleistet ist, daß die Kapsel oder Patrone an ihrem Gegenkragen zwischen der Hinterschneidung der Schraubkapsel und einem Dichtring oder dem vorderen Ende des Außengewindes abgestützt ist. Bei der Handhabung der Betätigungseinrichtung ist andererseits nicht ohne weiteres zu erkennen, ob die Schraubkappe vollständig aufgeschraubt ist.

Eine andere Betätigungseinrichtung ist aus der EP-A1-63 891 und der US-A-4,295,828 bekannt. Diese Betätigungseinrichtung weist einen nach unten offenen Kanal auf, der die dortige Patrone halten soll. Die Patrone soll in ihrem Schaft ein Übermaß gegenüber Seitenwänden des Kanals aufweisen, und dementsprechend soll das Material des Kanals etwas flexibel sein, damit die Patrone von der offenen Seite her eingesetzt werden kann.

Diese Anordnung hat sich jedoch in der Praxis als ungeeignet herausgestellt. Aufgrund der engen Führung des Gegenkragens in dem Kanal, die aus Stabilitätsgründen erforderlich ist, muß die Patrone beim Herausnehmen exakt parallel zur Achse des dortigen Stößels herausgeführt werden. Nachdem sie jedoch lediglich an ihrem vorderen Ende gegriffen werden kann, besteht regelmäßig die Gefahr, daß die Patrone beim Herausnehmen verkantet und sich der Gegenkragen der Patrone in die dortige enge Führung einkeilt. Der Benutzer geht dann davon aus, daß eine größere Betätigungskraft erforderlich ist, die er zwar ohne weiteres aufbringen kann, aber die jedoch dazu führt, daß die Patrone brechen kann, was zu entsprechenden unerwünschten Verunreinigungen sowohl der Betätigungseinrichtung als auch der Umgebung führt, insbesondere, wenn quecksilberhaltige Amalgam-Massen als pastöse Massen zum Einsatz gelangen.

Demgegenüber liegt der Erfindung die Aufgabe zugrunde, eine Betätigungseinrichtung gemäß dem Oberbegriff von Anspruch 1 zu schaffen, die eine sichere Betätigung bei hohen Betätigungskräften mit einer unproblematischen Entnahme einer Kapsel oder Patrone verbindet.

Diese Aufgabe wird erfindungsgemäß durch Anspruch 1 gelöst. Vorteilhafte Weiterbildungen ergeben sich aus den Unteransprüchen.

Die erfindungsgemäße Betätigungseinrichtung erlaubt zunächst eine sichere Verankerung bereits aufgrund der Einstückigkeit zwischen dem Schaft der Betätigungseinrichtung und dem kragenförmigen Vorsprung als Anschlag für die Halterung der Kapsel oder Patrone. Dies eröffnet die Möglichkeit, die Schiebemuffe in die Verriegelungsposition zu verschieben, in welcher sie den Haltebereich der Zungen für die Abstützung der Kapsel oder Patronen umgibt, so daß eine sichere Abstützung gewährleistet ist, nachdem die an sich federelastischen Zungen nicht ausweichen können und zum anderen eine eindeutige Verriegelungsposition aus der Stellung der Schiebemuffe ersichtlich ist.

Darüberhinaus eröffnet diese Erfindung überraschend die zusätzliche Möglichkeit, bei vollständig ausgedrückter Kapsel oder Patrone nach Lösen der Schiebemuffe über den Handgriff der Betätigungseinrichtung auch die Kapsel oder Patrone selbst aus der Betätigungseinrichtung herauszudrücken. Nachdem die Betätigungskraft über den Handgriff der Patrone gegenüber der Handkraft wesentlich erhöht ist, erlaubt diese Lösung eine vergleichsweise formsteife Ausbildung der für die Verankerung vorgesehenen Vorsprünge und auch die Ausbildung der Anschläge mit einer an 90° herankommenden Schrägstellung.

Die Erfindung zeichnet sich insofern durch eine konstruktiv saubere Aufteilung zwischen der Federfunktion für die Freigabe und Einbringung der Patrone einerseits und die Haltefunktion über die formsteife Schiebemuffe andererseits aus.

Gemäß einer besonders vorteilhaften Ausgestaltung ist es vorgesehen, daß eine Mehrzahl von Zungen sich ringförmig um die Kapsel oder Patrone erstrecken. Die Zungen laufen in einer Verdickung aus, die nach radial einwärts den kragenförmigen Vorsprung bildet und nach radial auswärts einen Anschlag für die Schiebemuffe bilden. Der radial einwärts gewandte Vorsprung erstreckt sich bis zur Außenwand der Kapsel oder Patrone, so daß die Kapsel oder Patrone an dem Vorsprung in radialer Richtung abgestützt und zugleich in axialer Richtung geführt ist. Hierdurch besteht die Möglichkeit, die Patrone axial bis zur Endposition, die durch den Anschlag zwischen dem kragenförmigen Vorsprung und dem Gegenkragen gebildet ist, verschieblich zu führen. Nachdem die Patrone eine sich schräg erstreckende Auslaßtülle aufweist, ist die Beweglichkeit in rückwärtiger Richtung durch den Anschlag zwischen der Auslasthülle und das vordere Ende der betreffenden Zunge begrenzt. In der Verriegelungsposition erstreckt sich die Schiebemuffe in einer axialen Stellung, in welcher sich das rückwärtige Ende der Kapsel oder Patrone deutlich überlappt. Demgegenüber besteht keine Überlappung zwischen der Schiebemuffe und der Kapsel oder Patrone in der Freigabeposition der Schiebemuffe, wobei es bevorzugt ist, daß in dieser Position auch ein deutlicher radialer Abstand besteht.

Durch die relativen Abmessungen in radialer Richtung kann eingestellt werden, ob die Anlage zwichen Betätigungseinrichtung und Patrone zwischen der Außenwand der Patrone und dem Vorsprung der Zungen oder zwischen der Außenfläche des Gegenkragens und der Innenfläche der Zunge oder an beiden Stellen vorgesehen sein soll. Um eine möglichst großflächige Abstützung zu gewährleisten, ist es bevorzugt, die Anlage zwischen dem Vorsprung der Zungen und der Außenfläche der Patrone vorzusehen.

Die Zungen weisen an ihrem vorderen Ende bevorzugt eine Innenfase oder radial einwärts weisende Schrägflächen auf, die die Einführung der Patrone bei zurückgeschobener Schiebemuffe erleichtert.

Weitere Vorteile, Einzelheiten und Merkmale ergeben sich aus der nachstehenden Beschreibung eines Ausführungsbeispiels anhand der Zeichnung.

Es zeigen:
- Fig. 1: eine teilweise aufgebrochene Seitenansicht einer Ausführungsform einer erfindungsgemäßen Betätigungsvorrichtung;
- Fig. 2: die Ausführungsform gemäß Fig. 1 in der Ansicht von links, also eine Ansicht der Betätigungseinrichtung von vorne;
- Fig. 3: eine teilweise aufgebrochene Draufsicht auf die Betätigungseinrichtung gemäß Fig. 1;
- Fig. 4: die Betätigungseinrichtung gemäß Fig. 1 Darstellung einer betätigten Position des Handgriffs;
- Fig. 5: eine vergrößerte Teilansicht der Ausführungsform gemäß Fig. 4;
- Fig. 6: eine schematisierte Vorderansicht der erfindungsgemäßen Betätigungseinrichtung unter Darstellung der Zungen;
- Fig. 7: eine Ansicht entsprechend der Darstellung gemäß Fig. 4, wobei die Schiebemuffe sich in der Freigabeposition befindet;
- Fig. 8: eine Ansicht gemäß Fig. 5, wobei die Schiebemuffe sich in der Freigabeposition befindet;
- Fig. 9: eine vergrößerte Darstellung des vorderen Teils der erfindungsgemäßen Betätigungsvorrichtung in einer Ausführungsform, wobei die Patrone nicht dargestellt ist;
- Fig. 10: die Schiebemuffe für die erfindungsgemäße Betätigungseinrichtung in einer Ausführungsform;
- Fig. 11: eine Darstellung des vorderen Teils der erfindungsgemäßen Betätigungsvorrichtung in einer zweiten Ausführungsform; und
- Fig. 12: eine Darstellung der zweiten Ausführungsform gemäß Fig. 11, wobei die Kapsel entfernt und die Schiebemuffe in der Freigabestellung ist.

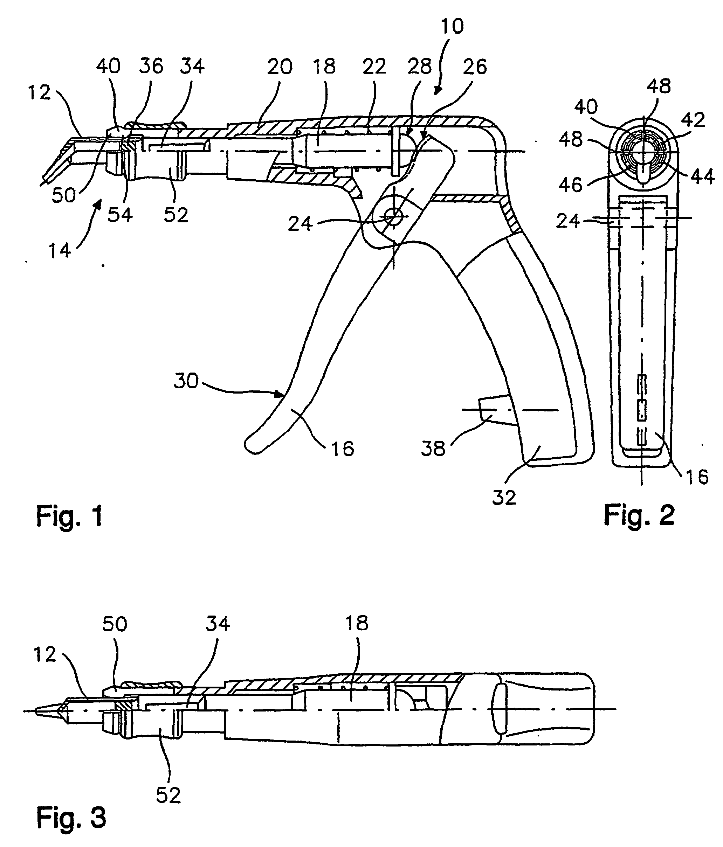

Die in Fig. 1 dargestellte Betätigungseinrichtung 10 ist in dem dargestellten Ausführungsbeispiel für das Ausdrücken von Dentalmassen bestimmt und nach der Art eines Injektors ausgebildet. Die hält eine Kapsel oder Patrone 12 an ihrem vorderen Ende 14. Die Betätigungseinrichtung weist einen Handgriff 16 auf, der auf einen Stößel 18 wirkt. Der Stößel 18 ist in dem Gehäuse 20 der Betätigungseinrichtung 10 beweglich gelagert und über eine Druckfeder 22 in Richtung auf den Handgriff federnd vorgespannt. Der Handgriff 16 ist an einem Lagerzapfen 24 schwenkbeweglich gelagert und wirkt mit einer balligen Druckfläche 26 auf den Stößel 18, der ebenfallse eine ballige Druckfläche 28 aufweist, die an der Druckfläche 26 entlangzugleiten vermag.

Der Abstand zwischen den Druckflächen 26 und 28 und dem Lagerzapfen 24, der die Schwenkachse für den Handgriff 16 bildet, ist wesentlich geringer als der Abstand zwischen einer Betätigungsmulde 30 des Handgriffs 16. Das Abstandsverhältnis beträgt etwa 1 zu 5, so daß auf den Stößel 18 nahezu die fünffache Handkraft bei Betätigung des Handgriffs 16 aufgebracht wird. Die Betätigungseinrichtung 10 ist zudem im wesentlichen pistolenförmig ausgebildet, so daß bereits von der grundsätzlichen Ausbildung her eine ergonomische Betätigung und eine günstige Kraftübertragung für das Zusammenbewegen des Handgriffs 16 zu einem Pistolengriff 32 hin möglich ist. Die aufgebrachte Kraft wird über die Stößelspitze 34 auf die Patrone 12 übertragen.

Die Patrone 12 weist einen Stempel 36 auf, auf den die Stößelspitze 34 wirkt. Der Außendurchmesser der Stösselspitze 34 ist etwas geringer als der Durchmesser des Stempels 36, so daß die Stößelspitze 34 in die Patrone 12 einzudringen vermag und dazu in der Lage ist, über die über den Stempel 36 übertragene Kraft die in den Figuren nicht dargestellte und in der Patrone 12 enthaltene Dentalmasse auszudrücken oder zu exprimieren.

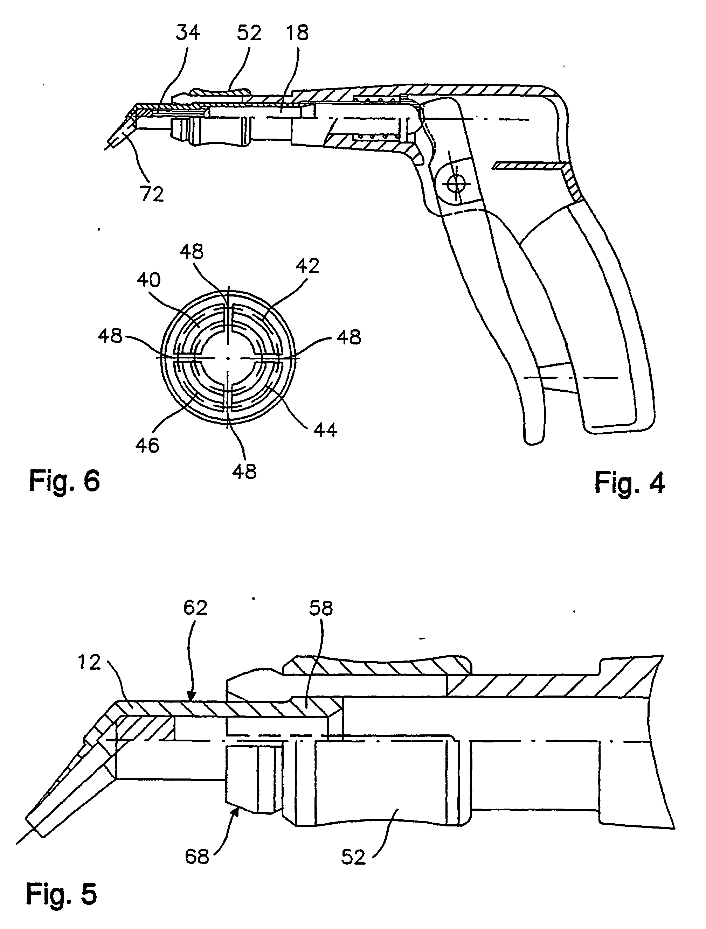

Wie sich aus dem Vergleich der Darstellung in den Figuren 1 und 4 ergibt, läßt sich der Handgriff 16 für das Ausdrücken der Dentalmasse von einer linken in eine rechte Endposition verschwenken. In der rechten Endposition liegt der Handgriff 16 an einem Anschlag 38 an, der der Wegbegrenzung dient. In dieser Stellung ist der Stößel 18 nach links, also zum vorderen Ende 14 des Gehäuses 20 gedrückt, wobei die Druckfeder 22 komprimiert wird. Der Stößel 18 verjüngt sich gestuft zum vorderen Ende hin, wobei in dem dargestellten Ausführungsbeispiel zwei Verjüngungen vorgesehen sind.

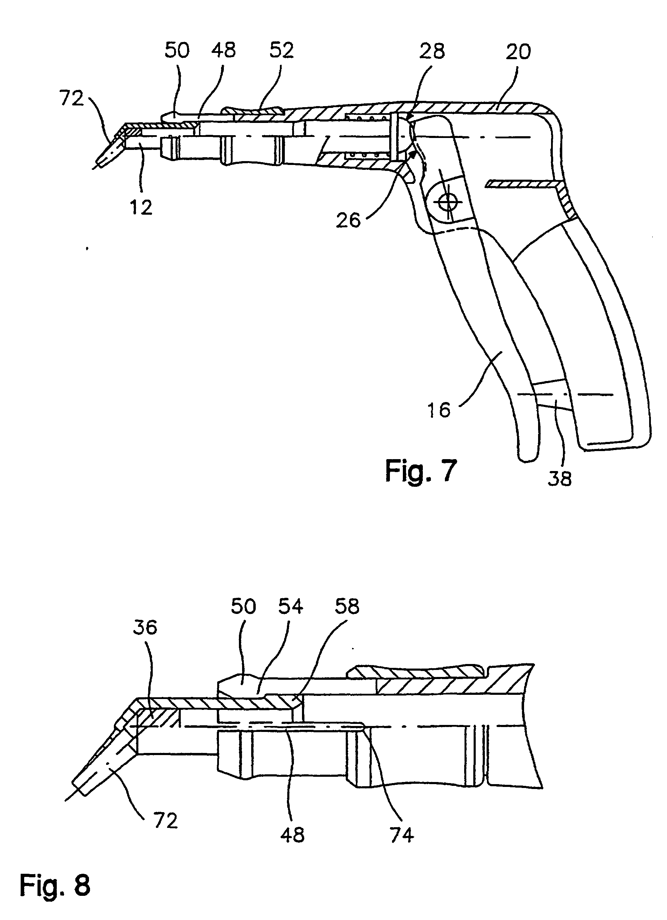

An dem vorderen Ende 14 weist das Gehäuse eine Mehrzahl von Zungen 40 bis 46 auf, die aus Fig. 2 besser ersichtlich sind. Die Zungen 40 bis 46 erstrecken sich je etwa viertelkreisförmig um die Patrone 12 herum. Zwischen ihnen sind Schlitze 48 vorgesehen, so daß sie je federnd beweglich sind. Sie enden je an einer Verdickung 50, die sich radial sowohl nach innen als auch nach außen erstreckt. Die radial äußere Erstrekkung der Verdickung 50 bildet einen Anschlag für die Bewegung einer Schiebemuffe der Spannbuchse 52, die zwischen einer in Fig. 1 dargestellten Verriegelungsposition und einer in Fig. 7 dargestellten Freigabeposition beweglich ist. In der Verriegelungsposition überlappt die Schiebemuffe 52 die Zungen 40 bis 46 bis zu den Verdickungen 50, während bei der Freigabeposition gemäß Fig. 7 die Zungen nahezu über ihre gesamte Länge frei liegen und damit federnd beweglich sind.

Die Schiebemuffe 52 verhindert in der Verriegelungsposition eine radiale Bewegung der Zungen 40 bis 46, nachdem sie sie ringförmig umschließt.

Von der Verdickung 50 nach radial einwärts erstreckt sich je ein kragenförmiger Vorsprung 54. Die Ausgestaltung des kragenförmigen Vorsprungs ist in den Figuren 5, 8 und 9 vergrößert dargestellt und besser ersichtlich. An seinem rückwärtigen Ende bildet der Vorsprung 54 einen Anschlag 56 für die Patrone 12. Hierzu weist die Patrone 12 an ihrem hinteren Ende einen Gegenkragen 58 auf, der sich nach radial auswärts erstreckt.

Das radiale Erstreckungsmaß des Gegenkragens 58 ist etwas geringer als dasjenige des Vorsprungs 54, so daß die nach radial einwärts weisende Fläche 60 des Vorsprungs 54 eine Gleitanlage für eine Außenfläche 62 der Patrone 12 bildet. Die Patrone 12 ist in dem dargestellten Ausführungsbeispiel in axialer Richtung gleitbeweglich gehalten, wobei die Anlage zwischen dem Anschlag 56 und dem Gegenkragen 58 die Bewegung nach vorne begrenzt.

Der Anschlag 56 ist in den dargestellten Ausführungsbeispielen als Schrägfläche mit einem Neigungswinkel von etwa 70° zur Achse 64 der Betätigungseinrichtung ausgebildet. Diese Abschrägung erlaubt einerseits eine sicherer Abstützung in der Verriegelungsposition der Schiebemuffe 52, andererseits jedoch ein Herausziehen oder Ausdrücken der Patrone 12 in der Freigabeposition der Schiebemuffe 52. Für das Herausziehen oder Ausdrücken der Patrone 12 werden über die schrägen Anschläge 56 die Zungen 40 bis 46 auseinandergespreizt, so daß sich die Schlitze 48 verbreitern und der Gegenkragen 58 in den Bereich der Fläche 60 gerät. Wenn diese gespreizte Position der Zungen 40 bis 46 ist, läßt sich die Patrone leicht entfernen.

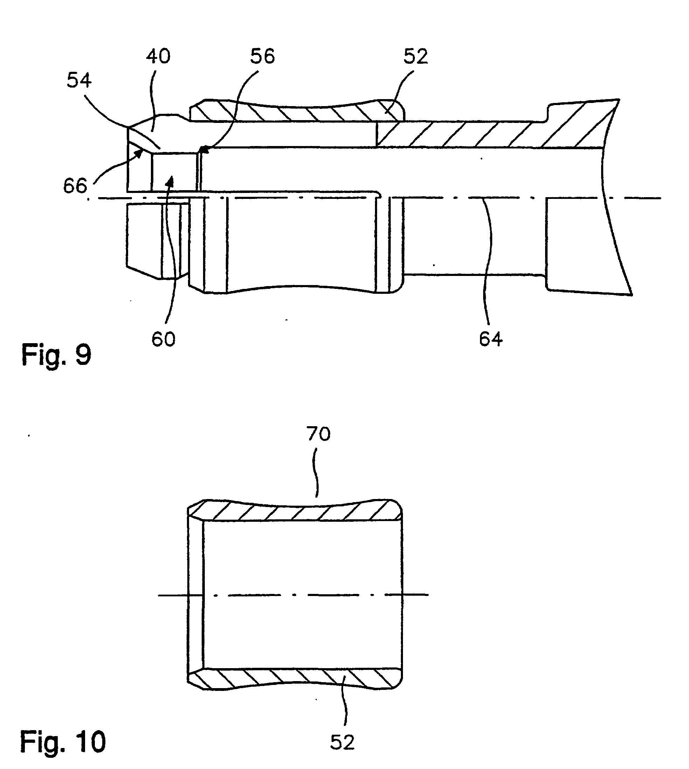

Die Vorsprüng 54 weisen - wie es aus Fig. 9 besonders gut ersichtlich ist - darüberhinaus an ihrem vorderen Ende eine Einführschräge 66 auf. Die Einführschräge 66 ist nach radial einwärts gewandt und dient dem Aufspreizen der Zungen 40 bis 46 beim Einführen zwischen Patrone 12 in der Freigabeposition der Schiebemuffe 52. Die Neigung der Einzelschräge 66 ist wesentlich flacher als die Neigung des Anschlags 56, nachdem für das Einführen der Patronen der Handgriff 16 und der Stößel 18 nicht für die Aufbringung einer Hilfskraft zur Verfügung steht, sondern die Patrone 12 manuell eingesetzt werden muß.

Der Gegenkragen 58 weist eine vergleichsweise große axiale Länge von dem Radius der Patrone 12 auf. Auch bei einer gewissen elastischen Verformung in Auszugsrichtung verbleibt der Gegenkragen 12 damit als sicherer Anschlag trotz eines vergleichsweise geringen radialen Erstreckungsmasses sowohl des Anschlags 56 als auch des Gegenkragens 58. Diese Ausgestaltung kommt der schlanken Gesamtkonzeption der erfindungsgemäßen Betätigungseinrichtung oder des erfindungsgemäßen Injektors zugute.

Besonders günstig bei der erfindungsgemäßen Ausgestaltung ist es, daß mit relativ wenigen Teilen, die zudem unverlierbar gehalten sind, eine sehr betriebssichere und auch für ziemlich zäh-viskose Massen geeignete, aber dennoch schlanke Betätigungseinrichtung zur Verfügung gestellt wird. Während in dem dargestellten Ausführungsbeispiel die radiale Erstreckung der Verdickung, die neben der Einführschräge 66 an ihrem vorderen radial auswärts gewandten Ende eine Fase 68 aufweist, etwa dem Radius der Patrone 12 entspricht, versteht es sich, daß eine modifizierte Ausgestaltung auch erheblich reduzierte oder vergrößerte Abmessungen erlaubt.

Besonders günstig ist es jedoch, daß in dem dargestellten Ausführungsbeispiel in der Verriegelungsposition der Schiebemuffe 52 die Schiebemuffe 52 sich in der Verlängerung der ziemlich flachen, sich beispielsweise im Winkel von 20° zur Achse 64 erstreckenden Fase verläuft und nicht weiter nach außen vorsteht, was der Handhabung zugute kommt. Dennoch erlaubt die Schiebemuffe 52 eine breite Griffmulde 70, die insbesondere aus Fig. 10 ohne weiteres ersichtlich ist.

Aus Fig. 4 ist ersichtlich, daß der Stößel 18 in der maximal nach links verlagerten Position mit seinem vorderen Ende 34 den Stempel 36 so weit nach vorne bewegt, daß der an das vordere Ende der Patrone 12 anschlägt und lediglich der Bereich einer Auslaßtülle 72 noch mit der viskosen Masse gefüllt ist.

Zum Entfernen der Patrone wird gemäß Fig. 7 die Schiebemuffe 52 nach rechts bewegt, so daß sie sich in der Freigabeposition befindet. Es ist günstig, wenn der Anschlag 38 leicht federnd ausgebildet ist, so daß durch einen leichten Zusatzdruck auf den Handgriff 16 über den Stößel 18 und den Stempel 36 der bereits an dem vorderen Ende der Patrone 12 anliegt, der Aufspreizwiderstand der Zungen über das Zusammenwirken von Anschlag 56 und Gegenkragen 58 überwunden wird und dann die leere Patrone 12 manuell leicht entfernt werden kann.

Die erfindungsgemäße Betätigungseinrichtung zeichnet sich ferner dadurch aus, daß in einem Zuge, aber auch beliebig in der gewünschten Menge, die viskose Masse, beispielsweise eine Dentalmasse, ausdrückbar ist. Wenn die Dentalmasse in mehreren Schritten je nach Bedarf ausgedrückt werden soll, erfolgt eine unproblematische Handhabung, nachdem der Handgriff 16 über die Druckfeder 22 je in seine Ausgangsposition zurückfedert. Der Bediener betätigt bei beispielsweise halb ausgedrückter Patrone 12 den Handgriff erneut etwa bis zum halben Betätigungsweg, wobei dann Stößelspitze 34 in Anlage an den Stempel 36 gerät und eine Widerstandszunahme zu spüren ist. Durch eine weitere Betätigung des Handgriffs 16 wird dann Dentalmasse weiter ausgedrückt, bis die Patrone 12 leer ist. In dieser Position gelangt der Handgriff 16 in Anlage an den Anschlag 38 und es verbleibt lediglich das zuvor beschriebene Entfernen der Patrone 12 unter Zuhilfenahme der Handkraft, die über den Handgriffs 16 aufbringbar ist.

Wie aus Fig. 8 ersichtlich ist, enden die Schlitze 48 an ihrem rückwärtigen Ende in einem Radius 74. Auch bei häufiger Aufspreizung der Zungen ist damit eine kerbwirkungsfreie und langlebige Bedienung der erfindungsgemäßen Betätigungseinrichtung gewährleistet.

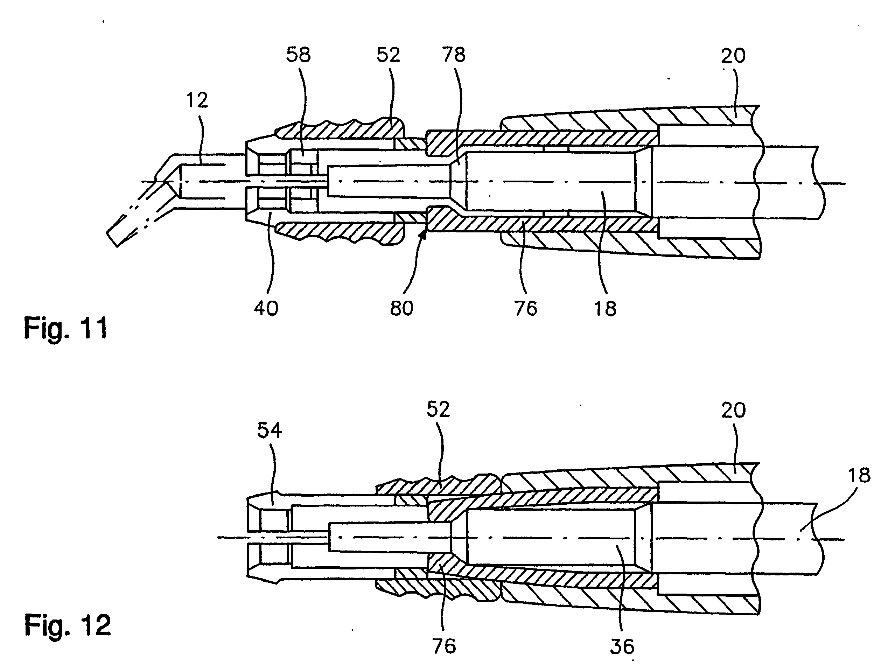

Eine weitere Ausgestaltung der erfindungsgemäßen Betätigungseinrichtung ist aus Fig. 11 und 12 ersichtlich. In Fig. 11 ist die Muffe 52 in der Arretierungsstellung für die Kapsel 12 dargestellt, so daß entsprechend der Darstellung gemäß Fig. 1, 4 und 5 der Gegenkragen 58 von dem Vorsprung 54 formschlüssig gehalten wird und die Kapsel 12 nicht durch den Druck des Stößels 18 aus der Betätigungseinrichtung herausdrückbar ist.

In dieser Position sind zungen- oder zangenförmig angeordnete Sperrglieder 76 funktionslos. Diese sind bei zurückgezogenem Stößel 18 im Bereich, jedoch etwas vor einem Absatz 78 des Stößels 18 angeordnet, wobei die radiale Erstreckung der Sperrglieder 76 so gewählt ist, daß der Stößel 18 auch mit seinem sich an den Absatz 78 anschließenden größeren Durchmesser frei beweglich ist und von den Sperrgliedern 76 nicht gesperrt wird.

Die Sperrglieder 76 sind als an dem Gehäuse 20 befestigte Zungen ausgebildet, die entsprechend den Zungen 40 bis 46 im vorderen Bereich beweglich sind. Es sind zwei einander gegenüberliegende Zungen vorgesehen, wobei das Gehäuse 20 sich an den Sperrgliedern 76 vorbei nach vorne erstreckt. Die Sperrglieder 76 weisen an ihrem vorderen/äußeren Ende eine Einführschräge 80 für die Muffe 52 auf. Beim Rückwärtsschieben der Muffe 52, also beim Schieben in die Freigabestellung, drückt damit die Muffe die Sperrglieder 76 nach radial einwärts, so daß sie mit ihren einwärts gerichteten Vorsprüngen sich aufeinander zubewegen und eine lichte Weite belassen, deren Durchmesser geringer ist als der Durchmesser des Stößels 18 anschließend an den Absatz 78.

Diese Position ist in Fig. 12 dargestellt.

Aus dem Vergleich der Figuren 11 und 12 ergibt sich, daß die Muffe 52 demnach entweder die Zungen 40 bis 46 hält, so daß diese nicht nach außen beweglich sind, oder die zungenförmigen Sperrglieder 76, so daß diese nicht nach außen beweglich sind, wobei die jeweils anderen Zungen je freigegeben werden.

Diese erfindungsgemäße Ausgestaltung weist den besonderen Vorteil auf, daß der Zahnarzt nicht versehentlich nach dem Einsetzen der Kapsel oder Patrone 12 vergißt, die Muffe 52 nach vorne zu schieben. Damit ist sichergestellt, daß die Kapsel nicht versehentlich mit hohem Druck nach vorne geschleudert wird, so daß insofern jegliches Verletzungsrisiko unterbunden ist. Praktisch wird die Betätigung der Betätigungseinrichtung gesperrt, solange die Schiebemuffe 52 nicht in die Arretierungsposition überführt ist.

## Patentansprüche

1. Betätigungseinrichtung für das Ausdrücken einer insbesondere im Dentalbereich verwendbaren pastösen Masse aus einer Kapsel oder Patrone (12), mit einem Gehäuse (20), das wenigstens zwei federnd bewegliche Zungen (40, 42, 44, 46) mit je einer Verdickung (50) aufweist, von der sich je ein kragenförmiger Vorsprung (54) erstreckt, an welchem je ein Anschlag (56) für die Abstützung der Kapsel oder Patrone an der Betätigungseinrichtung in Ausdrückrichtung ausgebildet ist.

2. Betätigungseinrichtung nach Anspruch 1, **dadurch gekennzeichnet, daß** der Anschlag (56) als Teil der Zunge (40, 42, 44, 46) ausgebildet ist, die an der Betätigungseinrichtung angebracht ist und für das Lösen der Kapsel oder Patrone (12) freigebbar ist.

3. Betätigungsvorrichtung nach Anspruch 1 oder 2, **dadurch gekennzeichnet, daß** mindestens zwei, insbesondere drei oder vier, Zungen (40 bis 46) die Kapsel oder Patrone (12) umgeben.

4. Betätigungseinrichtung nach einem der vorhergehenden Ansprüche, **dadurch gekennzeichnet, daß** die Betätigungseinrichtung (10) eine Schiebemuffe (52) aufweist, die für die Freigabe und die Arretierung der Kapsel oder Patrone (12) beweglich gelagert ist.

5. Betätigungseinrichtung nach einem der vorhergehenden Ansprüche, **dadurch gekennzeichnet, daß** eine Schiebemuffe (52) für die wahlweise Freigabe oder Arretierung der Kapsel oder Patrone (12) in eine Verriegelungsposition verschiebbar ist, in welcher der Anschlag (56) gegenüber einem Gegenkragen der Kapsel oder Patrone (12) verriegelt und das Ausdrücken der Kapsel oder Patrone (12) aus der Betätigungseinrichtung (10) sperrt.

6. Betätigungseinrichtung nach einem der vorhergehenden Ansprüche, **dadurch gekennzeichnet, daß** die Betätigungseinrichtung (10) einen über einen Handgriff (16) betätigbaren Stößel (18) aufweist, der auf einen Kolben oder Stempel (36) der Kapsel oder Patrone (12) zum Ausdrücken der Dentalmasse wirkt.

7. Betätigungseinrichtung nach Anspruch 6, **dadurch gekennzeichnet, daß** bei Freigabe des kragenförmigen Vorsprungs (54) über den Handgriff (16) und den Stößel (18) der Betätigungseinrichtung (10) die Kapsel oder Patrone (12) selbst aus der Betätigungseinrichtung (10) herausdrückbar ist.

8. Betätigungseinrichtung nach einem der vorhergehenden Ansprüche, **dadurch gekennzeichnet, daß** der Vorsprung (54) eine radiale Erstreckung aufweist, die größer als die radiale Erstreckung eines Gegenkragens ist, der an der Kapsel oder Patrone (12) ausgebildet ist.

9. Betätigungseinrichtung nach einem der vorhergehenden Ansprüche, **dadurch gekennzeichnet, daß** der Vorsprung (54) an dem dem Anschlag (56) gegenüberliegenden Ende eine Schrägfläche (66) aufweist, die schräg nach radial einwärts weist und über welche die Kapsel oder Patrone (12) unter Aufspreizen von Zungen (40 bis 46) für die Lagerung der Vorsprünge (54) in die Betätigungseinrichtung (10) einbringbar ist.

10. Betätigungseinrichtung nach einem der vorhergehenden Ansprüche, **dadurch gekennzeichnet, daß** die Schiebemuffe (52) in der Verriegelungsposition und insbesondere auch in der Freigabeposition, zwischen welchen Positionen die Schiebemuffe (52) schiebebeweglich geführt ist, insbesondere durch Reibschluß oder rastend gehalten ist.

11. Betätigungseinrichtung nach einem der vorhergehenden Ansprüche, **dadurch gekennzeichnet, daß** die Kapsel (12) in der Verriegelungsposition der Schiebemuffe (52) in der Betätigungseinrichtung gleitbeweglich gelagert ist und ein Gegenkragen (58) die Bewegungsstrecke der Kapsel oder Patrone (12) in der Betätigungseinrichtung (10) begrenzt.

12. Betätigungseinrichtung nach einem der vorhergehenden Ansprüche, **dadurch gekennzeichnet, daß** die Schiebemuffe (52) in der Verriegelungsposition den Rücken der Zungen (40 bis 46) flächig abstützt und sich insbesondere radial außerhalb des kragenförmigen Vorsprungs (54) und den Vorsprung axial überlappend erstreckt.

13. Betätigungseinrichtung nach einem der vorgergehenden Ansprüche, **dadurch gekennzeichnet, daß** der kragenförmige Vorsprung (54) mindestens über einen Teil seiner radialen Erstreckung schräg nach vorne verläuft, wobei der Winkel dieser Schrägfläche gegenüber der Achse der Betätigungseinrichtung etwa 70° beträgt.

14. Betätigungseinrichtung nach einem der Ansprüche 1 bis 12, **dadurch gekennzeichnet, daß** Zungen (40 bis 46) für das Halten der Kapsel oder der Patrone (12) nach radial auswärts vorgespannt einstückig mit der Betätigungseinrichtung (10) ausgebildet sind und durch die insbesondere in der Verriegelungsstellung einrastende Schiebemuffe (52) in die Verriegelungsposition spannbar sind.

15. Betätigungseinrichtung nach einem der vorgergehenden Ansprüche, **dadurch gekennzeichnet, daß** die Schiebemuffe eine ringförmige Griffmulde aufweist, die nach vorne und nach hinten in einer Verdickung endet.

16. Betätigungseinrichtung nach einem der vorhergehenden Ansprüche, **dadurch gekennzeichnet, daß** die Schiebemuffe (52) an ihrem vorderen Ende eine Innenfase aufweist.

17. Betätigungseinrichtung nach einem der vorhergehenden Ansprüche, **dadurch gekennzeichnet, daß** der Gegenkragen (58) der Patrone (12) sich in axialer Richtung über eine Länge erstreckt, die die Wandstärke der Patrone (12) erheblich übersteigt, insbesondere etwa doppelt so groß ist.

18. Betätigungseinrichtung nach einem der vorhergehenden Ansprüche, **dadurch gekennzeichnet, daß** ein Sperrglied (76) in der Freigabestellung der Schiebemuffe (52) das Ausdrücken des Kolbens oder Stempels (36) sperrt und insbesondere als Sperrzunge ausgebildet ist.

19. Patrone für eine Betätigungseinrichtung nach einem der vorhergehenden Ansprüche, **dadurch gekennzeichnet, daß** sie einen Gegenkragen (58) aufweist, der von dem kragenförmigen Vorsprung (54) hintergreifbar ist.

20. Patrone für eine Betätigungseinrichtung nach Anspruch 19, **dadurch gekennzeichnet, daß** der Gegenkragen (58) von der Schiebemuffe (52) in deren vorderer Position überlappbar ist, und daß die Schiebemuffe (52) sich in dieser Position über eine Anlagefläche für den Anschlag (56) nach vorne hinaus erstreckt.

## Claims

1. An actuating device for ejecting from a capsule or cartridge (12) a pasty compound which, in particular, can be used in the dental sector, with a housing (20) which has at least two resiliently movable tongues (40,42,44,46) each with a thickened portion (50), from which extends a respective collar-shaped projection (54) on which a respective abutment (56) is formed to support the capsule or cartridge against the actuating device in the ejection direction.

2. An actuating device according to Claim 1, **characterised in that** the abutment (56) is formed as part of the tongue (40,42,44,46) which is mounted on the actuating device and can be released for the loosening of the capsule or cartridge (12).

3. An actuating device according to Claim 1 or 2, **characterised in that** at least two, in particular three or four tongues (40 to 46) surround the capsule or cartridge (12).

4. An actuating device according to any one of the preceding Claims, **characterised in that** the actuating device (10) has a sliding sleeve (52) which is movably mounted for the release and locking in place of the capsule or cartridge (12).

5. An actuating device according to any one of the preceding Claims, **characterised in that** a sliding sleeve (52) for the alternative release or locking in place of the capsule or cartridge (12) can slide into a locking position in which the abutment (56) is locked with respect to a counter-collar of the capsule or cartridge (12) and blocks the ejection of the capsule or cartridge (12) from the actuating device (10).

6. An actuating device according to any one of the preceding Claims, **characterised in that** the actuating device (10) has a plunger (18) which can be operated via a handle (16) and which acts on a piston or ram (36) of the capsule or cartridge (12) so as to eject the dental compound.

7. An actuating device according to Claim 6, **characterised in that**, upon release of the collar-like projection (54) via the handle (16) and the plunger (18) of the actuating device (10), the capsule or cartridge (12) itself can be ejected from the actuating device (10).

8. An actuating device according to any one of the preceding Claims, **characterised in that** the projection (54) has a radial extension which is greater than the radial extension of a counter-collar which is formed on the capsule or cartridge (12).

9. An actuating device according to any one of the preceding Claims, **characterised in that**, at the end opposite the abutment (56), the projection (54) has an inclined surface (66) which faces obliquely radially inwards and via which the capsule or cartridge (12) can be introduced into the actuating device (10), thus expanding tongues (40 to 46) for the mounting of the projections (54).

10. An actuating device according to any one of the preceding Claims, **characterised in that** the sliding sleeve (52) is retained in the locking position and, in particular, also in the release position, between which positions the sliding sleeve (52) is guided in sliding movement, in particular is retained by frictional resistance or detent action.

11. An actuating device according to any one of the preceding Claims, **characterised in that**, in the locking position of the sliding sleeve (52), the capsule (12) is mounted for sliding movement in the actuating device (10) and a counter-collar (58) limits the range of movement of the capsule or cartridge (12) in the actuating device (10).

12. An actuating device according to any one of the preceding claims, **characterised in that**, in the locking position, the sliding sleeve (52) bears on the surface of the back of the tongues (40 to 46) and extends, in particular, radially outside the collar-like projection (54) and axially overlapping the projection.

13. An actuating device according to any one of the preceding Claims, **characterised in that** the collar-like projection (54) extends obliquely forwards at least over part of its radial extension, the angle of this oblique surface relative to the axis of the actuating device (10) being approximately 70°.

14. An actuating device according to any one of Claims 1 to 12, **characterised in that** tongues (40 to 46) for retaining the capsule or the cartridge (12) are formed, preloaded radially outwards, in one piece with the actuating device (10) and can be clamped in the locking position by the sliding sleeve (52) engaging in particular in the locking position.

15. An actuating device according to any one of the preceding Claims, **characterised in that** the sliding sleeve (52) has an annular grip depression which ends at the front and rear in a thickened portion.

16. An actuating device according to any one of the preceding Claims, **characterised in that** the sliding sleeve (52) has an internal bevel at its front end.

17. An actuating device according to any one of the preceding Claims, **characterised in that** the counter-collar (58) of the cartridge (12) extends in axial direction over a length which considerably exceeds the wall thickness of the cartridge (12) and which, in particular, is approximately twice as great.

18. An actuating device according to any one of the preceding Claims, **characterised in that** in the release position of the sliding sleeve (52) a blocking member (76) blocks the ejection of the piston or ram (36) and, in particular, takes the form of a blocking tongue.

19. A cartridge for an actuating device according to any one of the preceding Claims, **characterised in that** it has a counter-collar (58) behind which the collar-like projection (54) can engage.

20. A cartridge for an actuating device according to Claim 19, **characterised in that** the counter-collar (58) can be overlapped by the sliding sleeve (52) in its forward position, and **in that**, in this position, the sliding sleeve (52) extends forwards beyond a stop surface for the abutment (56).

## Revendications

1. Dispositif d'actionnement pour éjecter une masse pâteuse, utilisable en particulier dans le domaine dentaire, à partir d'une capsule ou d'une cartouche (12), comprenant un boîtier (20), qui présente au moins deux languettes élastiques (40, 42, 44, 46) ayant chacune un renflement (50) à partir duquel s'étend un élément en saillie en forme de collerette (54), sur lequel est formée une butée (56) pour l'appui de la capsule ou de la cartouche sur le dispositif d'actionnement dans la direction d'éjection.

2. Dispositif d'actionnement selon la revendication 1, **caractérisé en ce que** la butée (56) est réalisée en tant que partie de la languette (40, 42, 44, 46) qui est fixée au dispositif d'actionnement et qui peut être relâchée pour l'éjection de la capsule ou de la cartouche (12).

3. Dispositif d'actionnement selon la revendication 1 ou 2, **caractérisé en ce qu'**au moins deux, en particulier trois ou quatre languettes (40 à 46) entourent la capsule ou la cartouche (12).

4. Dispositif d'actionnement selon l'une quelconque des revendications précédentes, **caractérisé en ce que** le dispositif d'actionnement (10) présente un manchon coulissant (52) qui est disposé de manière mobile pour le relâchement et le blocage de la capsule ou de la cartouche (12).

5. Dispositif d'actionnement selon l'une quelconque des revendications précédentes, **caractérisé en ce qu'**un manchon coulissant (52) peut coulisser, au choix pour relâcher ou bloquer la capsule ou la cartouche (12), dans une position de verrouillage, dans laquelle la butée (56) est verrouillée contre une contre-collerette de la capsule ou de la cartouche (12) et bloque l'éjection de la capsule ou de la cartouche (12) hors du dispositif d'actionnement (10).

6. Dispositif d'actionnement selon l'une quelconque des revendications précédentes, **caractérisé en ce que** le dispositif d'actionnement (10) présente un poussoir (18) actionnable par l'intermédiaire d'une poignée (16), qui agit sur un piston ou un mandrin (36) de la capsule ou de la cartouche (12) pour l'éjection de la masse dentaire.

7. Dispositif d'actionnement selon la revendication 6, **caractérisé en ce que**, lors du relâchement de l'élément en saillie en forme de collerette (54) par l'intermédiaire de la poignée (16) et du poussoir (18) du dispositif d'actionnement (10), la capsule ou la cartouche (12) peut elle-même être éjectée hors du dispositif d'actionnement (10).

8. Dispositif d'actionnement selon l'une quelconque des revendications précédentes, **caractérisé en ce que** l'élément en saillie (54) présente une extension radiale qui est plus grande que l'extension radiale d'une contre-collerette qui est formée sur la capsule ou la cartouche (12).

9. Dispositif d'actionnement selon l'une quelconque des revendications précédentes, **caractérisé en ce que** l'élément en saillie (54) présente une surface inclinée (66) au niveau de l'extrémité opposée à la butée (56), qui est inclinée radialement vers l'intérieur et par l'intermédiaire de laquelle la capsule ou la cartouche (12) peut être insérée dans le dispositif d'actionnement (10) en écartant les languettes (40 à 46) pour loger les éléments en saillie (54).

10. Dispositif d'actionnement selon l'une quelconque des revendications précédentes, **caractérisé en ce que** le manchon coulissant (52), dans la position de verrouillage et en particulier dans la position de relâchement, entre lesquelles positions le manchon coulissant (52) est guidé par un mouvement coulissant, est maintenu en particulier par friction ou par encliquetage.

11. Dispositif d'actionnement selon l'une quelconque des revendications précédentes, **caractérisé en ce que**, dans la position de verrouillage du manchon coulissant (52), la capsule (12) est logée en pouvant coulisser dans le dispositif d'actionnement et une contre-collerette (58) limite la course de la capsule ou de la cartouche (12) dans le dispositif d'actionnement (10).

12. Dispositif d'actionnement selon l'une quelconque des revendications précédentes, **caractérisé en ce que** le manchon coulissant (52), dans la position de verrouillage, s'appuie sur la surface du dos des languettes (40 à 46) et s'étend en particulier radialement à l'extérieur de l'élément en saillie en forme de collerette (54) et en chevauchant axialement l'élément en saillie.

13. Dispositif d'actionnement selon l'une quelconque des revendications précédentes, **caractérisé en ce que** l'élément en saillie en forme de collerette (54) se prolonge de manière inclinée sur au moins une partie de son extension radiale, l'angle de cette surface inclinée par rapport à l'axe du dispositif d'actionnement étant d'environ 70°.

14. Dispositif d'actionnement selon l'une quelconque des revendications 1 à 12, **caractérisé en ce que** les languettes (40 à 46), pour la retenue de la capsule ou de la cartouche (12), sont formées d'une seule pièce avec le dispositif d'actionnement (10) en étant précontraintes radialement vers l'extérieur et peuvent être contraintes dans la position de verrouillage par le manchon coulissant (52) s'encliquetant en particulier dans la position de verrouillage.

15. Dispositif d'actionnement selon l'une quelconque des revendications précédentes, **caractérisé en ce que** le manchon coulissant présente une concavité annulaire qui se termine à l'avant et à l'arrière par un renflement.

16. Dispositif d'actionnement selon l'une quelconque des revendications précédentes, **caractérisé en ce que** le manchon coulissant (52) présente un chanfrein interne au niveau de son extrémité avant.

17. Dispositif d'actionnement selon l'une quelconque des revendications précédentes, **caractérisé en ce que** la contre-collerette (58) de la cartouche (12) s'étend dans la direction axiale sur une longueur qui est nettement plus grande que l'épaisseur de la paroi de la cartouche (12), en particulier qui est environ deux fois plus grande.

18. Dispositif d'actionnement selon l'une quelconque des revendications précédentes, **caractérisé en ce qu'**un élément de blocage (76) bloque l'éjection du piston ou du mandrin (36) dans la position de relâchement du manchon coulissant (52) et est réalisé en particulier sous forme de languette de blocage.

19. Cartouche pour un dispositif d'actionnement selon l'une quelconque des revendications précédentes, **caractérisée en ce qu'**elle présente une contre-collerette (58) qui peut être retenue par l'arrière par l'élément en saillie en forme de collerette (54).

20. Cartouche pour un dispositif d'actionnement selon la revendication 19, **caractérisée en ce que** la contre-collerette (58) peut être recouverte par le manchon coulissant (52) dans sa position avancée et **en ce que** le manchon coulissant (52) s'étend dans cette position vers l'avant au-delà d'une surface d'appui pour la butée (56).
